(19) Europäisches Patentamt
European Patent Office
Office européen des brevets

(11) **EP 4 576 241 A1**

(12) **EUROPEAN PATENT APPLICATION**
published in accordance with Art. 153(4) EPC

(43) Date of publication:
**25.06.2025 Bulletin 2025/26**

(21) Application number: **23890546.7**

(22) Date of filing: **30.10.2023**

(51) International Patent Classification (IPC):
**H01M 4/13** (2010.01)       **H01M 50/536** (2021.01)
**H01M 10/052** (2010.01)

(52) Cooperative Patent Classification (CPC):
**H01M 4/13; H01M 10/052; H01M 10/054;
H01M 10/058; H01M 10/42; H01M 50/536;
Y02E 60/10**

(86) International application number:
**PCT/CN2023/127800**

(87) International publication number:
**WO 2024/104110 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.11.2022   CN 202223023491 U**

(71) Applicant: **Contemporary Amperex Technology
(Hong Kong) Limited
Central (HK)**

(72) Inventors:
• **ZHANG, Yu**
  **Ningde, Fujian 352100 (CN)**

• **XUE, Qingrui**
  **Ningde, Fujian 352100 (CN)**
• **ZHANG, Zige**
  **Ningde, Fujian 352100 (CN)**
• **ZHAO, Zhengyuan**
  **Ningde, Fujian 352100 (CN)**
• **ZHANG, Jinsong**
  **Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54) **ELECTRODE COMPONENT, BATTERY CELL, BATTERY AND ELECTRICAL APPARATUS**

(57)    The present application relates to the technical field of batteries, and discloses an electrode component, a battery cell, a battery and an electrical apparatus. The electrode component (30) includes an electrode body including an active material layer (33), an insulation substrate (31) and a conductive layer (32) arranged on the insulation substrate (31), in which, a surface, facing away from the insulation substrate (31), of the conductive layer (32) includes a first area (32a) and a second area (32b) which are arranged adjacent to each other in a first direction (X), and the active material layer (33) covers the first area (32a); and a tab assembly (34) of which one end is connected to the second area (32b); wherein in the first direction (X), the maximum space between the end, connected to the second area (32b), of the tab assembly (34) and the active material layer (33) is D0, the minimum size of a part, not connected to the tab assembly (34), of the second area (32b) is D1, and D0 is smaller than D1;

and therefore, the coating area of the active material layer of the electrode component can be increased, thereby improving the accommodating quantity of the active material layer on the electrode component.

FIG. 3

## Description

The present application claims priority to Chinese Patent Application 202223023491.0, filed with the Chinese Patent Office on November 14, 2022 and entitled "ELECTRODE COMPONENT, BATTERY CELL, BATTERY AND ELECTRICAL APPARATUS", which is incorporated herein by reference in its entirety.

## TECHNICAL FIELD

The present application relates to the technical field of batteries, and particularly relates to an electrode component, a battery cell, a battery and an electrical apparatus.

## BACKGROUND

A composite electrode plate has a wide range of application in a secondary battery, and belong to electrode components. The composite electrode plate generally includes a composite current collector (which can be called an electrode body), a tab welded to the composite current collector, and an active material coating a surface of the composite current collector.

Because the composite current collector of the composite electrode plate is of a sandwich structure including a metal coating, an intermediate insulating base layer and a metal coating, the thickness of the metal coatings is greatly reduced, and the metal coatings are not easy to produce too long burrs to cause short circuit lapping of opposite electrode plates, and the safety is high. In related technologies, the composite electrode plate is usually divided into a blank area, an insulating layer coating region and an active material layer coating region which are arranged sequentially in the width direction of the composite electrode plate, and the blank area is separately in welding connection with the tab. There is still a lot of possibility of improvement in design of the composite electrode plate with this structure at least in terms of increasing the coating area of the active material layer.

## SUMMARY

Objectives of embodiments of the present application are to provide an electrode component, a battery cell, a battery and an electrical apparatus, so as to increase the coating area of an active material layer of the electrode component, thereby increasing the capacity of the active material layer on the electrode component.

The embodiments of the present application adopt the technical solution as follows:
in a first aspect, provided is an electrode component, which includes:

> an electrode body including an active material layer, an insulation substrate and a conductive layer arranged on the insulation substrate, in which, a surface, facing away from the insulation substrate, of the conductive layer includes a first area and a second area which are adjacently arranged in a first direction, and the active material layer covers the first area; and
a tab assembly of which one end is connected to the second area;
in which, in the first direction, the maximum space between the end, connected to the second area, of the tab assembly and the active material layer is D0; and the minimum size of a part, not connected to the tab assembly, of the second area is D1, and D0 is smaller than D1.

Compared with an electrode component in related technology, in some embodiments of the present application, the active material layer covers a first area; one end of the tab assembly is connected to the second area, in the first direction, the maximum space between the end, connected to the second area, of the tab assembly and the active material layer is D0, the minimum size of the part, not connected to the tab assembly, of the second area is D1, and D0 is smaller than D1, and therefore, a structure that a blank area is independently arranged at the side, facing away from the active material layer coating region, of the insulating layer coating region for welding the tab in the related technology is changed. Therefore, according to the embodiments of the present application, the active material layer can be arranged on the conductive layer in a longer size along the first direction, that is, the size of the first area in the first direction can be increased under a condition that the size of the conductive layer in the first direction is fixed, then more active material layers can be coated, thereby increasing the coating area of the active material layer, improving the capacity of the active material layer on the electrode component; and an insulation coating can also be coated on the surface of the second area in subsequent electrode component manufacturing process.

In some embodiments, $0.5 \geq D0/D1$.

Because $0.5 \geq D0/D1$, the tab assembly and the second area can form a large-area connection area, which facilitates the improvement of the current carrying capacity of the electrode component.

In some embodiments, the end, connected to the second area, of the tab assembly is in contact with the active material layer. By further making the end, connected to the second area, of the tab assembly in contact with the active material layer, the space of the second area in the first direction can be utilized to the maximum extent, thus the connection area between the tab assembly and the second area is increased, and then the current carrying capacity is improved.

In some embodiments, the tab assembly includes:

> a connection section connected to the second area;

and

an extension section which is connected to the connection section and extends out of the conductive layer;

in which, the second area is in a long strip shape extending along a second direction, the maximum size W1 of the connection section in the second direction is not smaller than the maximum size W2 of the extension section in the second direction, and the second direction is perpendicular to the first direction.

The maximum size W1 of the connection section in the second direction is not smaller than the maximum size W2 of the extension section in the second direction, so the size of the connection section in the second direction is increased, then the connection area between the connection section and the second area is increased, and the current carrying capacity is improved.

In some embodiments, W1/W2≥1.5. A large number of tests verify that when W1/W2≥1.5, the connection area between the connection section and the second area can be well increased, and thus the current carrying capacity is improved.

In some embodiments, W1=2*W2. A large number of tests verify that W1 is twice of W2, so that the size of the connection section in the second direction is not too long, and moreover, the current carrying capacity is improved.

In some embodiments, the connection section is of a long-strip-shaped sheet structure, and the long-strip-shaped sheet structure is provided with a welding surface which is attached to and is in welding connection with the second area. Due to the long-strip-shaped sheet structure, the structure is simple, machining and molding are facilitated; and the long-strip-shaped sheet structure is provided with the welding surface which is attached to and is in welding connection with the second area, which facilitates welding connection.

In some embodiments, the insulation substrate includes a first surface and a second surface which are arranged back to back, the conductive layer includes a first conductive layer arranged on the first surface and a second conductive layer arranged on the second surface, and the first conductive layer and the second conductive layer correspondingly include the first area and the second area which are adjacently arranged in the first direction; the tab assembly includes:

a first tab sheet of which one end is connected to the second area of the first conductive layer; and

a second tab sheet which is arranged on one side of the first tab sheet in a stacked mode, in which, one end of the second tab sheet is connected to the second area of the second conductive layer, and the other end of the second tab sheet is electrically connected to the first tab sheet;

in which, the connection section includes an end, connected to the first conductive layer, of the first tab sheet, and an end, connected to the second conductive layer, of the second tab sheet; and the extension section includes an end, not connected to the first conductive layer, of the first tab sheet, and an end, not connected to the second conductive layer, of the second tab sheet.

In some embodiments, the tab assembly includes the first tab sheet and the second tab sheet; the connection section includes the end, connected to the first conductive layer, of the first tab sheet, and the end, connected to the second conductive layer, of the second tab sheet; and the extension section includes the end, not connected to the first conductive layer, of the first tab sheet, and the end, not connected to the second conductive layer, of the second tab sheet, or the extension section can be connected to the corresponding first conductive layer and the corresponding second conductive layer for conduction.

In some embodiments, the insulation substrate includes the first surface and the second surface which are arranged back to back, the conductive layer includes the first conductive layer arranged on the first surface and the second conductive layer arranged on the second surface, and the first conductive layer and the second conductive layer correspondingly include the first area and the second area which are adjacently arranged in the first direction; the tab assembly includes:

a tab sheet of which one end is in riveted connection with the second area of the first conductive layer and the second area of the second conductive layer;

in which, the connection section includes an end, connected to the first conductive layer, of the tab sheet; and the extension section includes an end, not connected to the second conductive layer, of the tab sheet.

In some embodiments, the tab assembly includes a single tab sheet, and one end of the tab sheet is in riveted connection with the second area of the first conductive layer and the second area of the second conductive layer; the connection section includes an end, connected to the first conductive layer, of the tab sheet; and the extension section includes an end, not connected to the second conductive layer, of the tab sheet for conduction.

In some embodiments, the electrode component further includes:

a first protection layer which at least partially covers the position, not connected to the tab assembly, of the second area;
and/or,
a second protection layer which at least partially covers the end, connected to the second area, of the tab assembly.

The first protection layer and the second protection layer have the same protection effect.

In some embodiments, the first protection layer includes an insulation ceramic. Therefore, the first protection layer has the insulation protection effect.

In some embodiments, the second protection layer includes a water-based adhesive, a hot melt adhesive or an insulation ceramic, so that the second protection layer has the insulation protection effect.

In some embodiments, the insulation substrate includes the first surface and the second surface which are arranged back to back, the conductive layer includes the first conductive layer arranged on the first surface and the second conductive layer arranged on the second surface, and the first conductive layer and the second conductive layer correspondingly include the first area and the second area which are adjacently arranged in the first direction; the tab assembly includes:

the first tab sheet of which one end is connected to the second area of the first conductive layer; and the second tab sheet which is arranged on one side of the first tab sheet in a stacked mode, in which, one end of the second tab sheet is connected to the second area of the second conductive layer, and the other end of the second tab sheet is electrically connected to the first tab sheet.

The first tab sheet and the second tab sheet are arranged, the first tab sheet is electrically connected to the second tab sheet to realize conductive convergence of the first conductive layer and the second conductive layer.

In some embodiments, the maximum size of the first tab sheet extending out of the first conductive layer in the first direction is D11, and the maximum size of the second tab sheet extending out of the first conductive layer in the first direction is D12;

in which, D11 > D12.

In some cases, if the tab assembly is too thick, it is inconvenient to bend, consequently, subsequent machining and manufacturing of the battery cell are inconvenient. According to the embodiment of the present application, D11 > D12, so the first tab sheet is a long tab, and the second tab sheet is a short tab, and then the first tab may have a part which is not connected to the second tab sheet; and the tab assembly is thinner in this part, so that it is more convenient to bend, and the bending of an electrode assembly in the subsequent machining and manufacturing process of the battery cell is improved.

In some embodiments, D11/D12≥5. A large number of tests verify that when D11/D12≥5, a relatively good part convenient for bending the tab assembly can be formed.

In some embodiments, the insulation substrate includes the first surface and the second surface which are arranged back to back, the conductive layer includes the first conductive layer arranged on the first surface and the second conductive layer arranged on the second surface, and the first conductive layer and the second conductive layer correspondingly include the first area and the second area which are adjacently arranged in the first direction; the tab assembly includes:

the tab sheet of which one end is in riveted connection with the second area of the first conductive layer and the second area of the second conductive layer.

In some embodiments, the tab assembly includes the single tab sheet, and one end of the tab sheet is in riveted connection with the second area of the first conductive layer and the second area of the second conductive layer; the connection section includes the end, connected to the first conductive layer, of the tab sheet; and the extension section includes the end, not connected to the second conductive layer, of the tab sheet for conduction.

In a second aspect, the present application provides a battery cell, which includes the abovementioned electrode component, so that the capacity of the active material layer on the electrode component can be improved by increasing the coating area of the active material layer of the electrode component, and then the performance of the battery cell is improved.

In a third aspect, the present application provides a battery, which includes the abovementioned battery cell, and the battery cell is used for providing electric energy. Therefore, the capacity of the active material layer on the electrode component can be improved by increasing the coating area of the active material layer of the electrode component, and then the performance of the battery cell is improved.

In a fourth aspect, the present application provides an electrical apparatus, which includes the abovementioned battery, and the battery is used for providing electric energy, so that the capacity of the active material layer on the electrode component can be improved by increasing the coating area of the active material layer of the electrode component, and then the performance of the battery cell is improved.

## BRIEF DESCRIPTION OF THE DRAWINGS

In order to explain the technical scheme in the embodiments of this application more clearly, the accompanying drawings needed in the description of the embodiments or demonstration technical descriptions will be briefly introduced below. Obviously, the accompanying drawings in the following description are only some embodiments of the application. For a person of ordinary skill in the art, other drawings can be obtained according to these accompanying drawings without creative work.

FIG. 1 is a structural schematic diagram of a vehicle provided in some embodiments of the present application;
FIG. 2 is an exploded view of a battery provided in some embodiments of the present application;
FIG. 3 is a schematic diagram of an unfolded electrode component provided in some embodiments of the present application;
FIG. 4 is a schematic diagram of a cross-sectional section of an electrode component in an A-A direction in FIG. 3;
FIG. 5 is a schematic diagram of a cross-sectional section of an electrode component provided in some other embodiments of the present application; and
FIG. 6 is a schematic diagram of a cross-sectional section of an electrode component provided in yet another embodiments of the present application.

Description of reference numerals:

1000, vehicle; 100, battery; 200, controller; 300, motor;
10, box body; 11, first part; 12, second part;
20, battery cell;
30, electrode component; 31, insulation substrate; 311, first surface; 312, second surface; 32, conductive layer; 321, first conductive layer; 322, second conductive layer; 32a, first area; 32b, second area; 33, active material layer; 34, tab assembly; 341, first tab sheet; 342, second tab sheet; 34a, connection section; 34b, extension section; 35, first protection layer; 36, second protection layer; 37, tab sheet; 38, riveting piece;
X, first direction; and Y, second direction.

## DETAILED DESCRIPTION

Embodiments of the technical solutions of the present application will be described in detail below with reference to the drawings. The following embodiments are only used for more clearly illustrating the technical solution of the present application and are therefore only examples and not to limit the scope of protection of the present application.
Unless otherwise defined, all technical and scientific terms used herein have the same meanings as generally understood by those skilled in the art of the present application; the terms used herein are intended only to describe specific embodiments and are not intended to limit the present application; and the terms "including" and "having" and any variations thereof in the description and claims of the present application and in the foregoing description of the accompanying drawings and in the description thereof, and any variations thereof, are intended to cover non-exclusive inclusions.
In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiment of the present application, the meaning of "a plurality of" is more than two, unless otherwise expressly and specifically qualified.
A reference to "embodiment" herein means that a particular feature, structure or characteristic described in conjunction with an embodiment may be included in at least one embodiment of the present application. The occurrence of the phrase in various places in the description does not necessarily refer to the same embodiment, nor is it an independent or alternative embodiment that is mutually exclusive with other embodiments. It is explicitly and implicitly understood by those skilled in the art that the embodiments described herein can be combined with other embodiments.
In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. In addition, the character "/" in this article generally indicates that the relationship between the preceding and following objects is an "or".
In the description of the embodiment of the present application, the term "a plurality of" refers to more than two (including two), similarly, "a plurality of groups" refers to two or more groups (including two groups), and "a plurality of members" refers to more than two members (including two members).
In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like which indicate the orientation or positional relationship are based on the orientation or positional relationship shown in the accompanying drawing, and are only for the convenience of describing the embodiments of the present application and simplifying the description, and do not indicate or imply that the device or element referred to must have a specific orientation, be constructed and operated in a specific orientation, and therefore cannot be construed as a restriction on the embodiments of the present application.
In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meaning of the above terms in the present application may be understood on a case-by-case basis.

In the present application, a battery cell may include a secondary lithium-ion battery cell, a primary lithium-ion battery cell, a lithium-sulfur battery cell, a sodium lithium-ion battery cell, a sodium-ion battery cell or a magnesium-ion battery cell, etc., which is not limited in some embodiments of the present application.

The battery cell includes an electrode assembly and an electrolyte; and the electrode assembly includes a positive electrode plate, a negative electrode plate and a spacer. The battery cell mainly works by means of movement of metal ions between the positive electrode plate and the negative electrode plate. The positive electrode plate includes a positive electrode current collector and a positive electrode active material layer, and the positive electrode active material layer is coated on a surface of the positive electrode current collector; and the positive electrode current collector includes a positive electrode coating region and a positive tab connected to the positive electrode coating region, the positive electrode coating region is coated with the positive electrode active material layer, and the positive tab is not coated with the positive electrode active material layer. Taking a lithium-ion battery cell as an example, the material of the positive electrode current collector may be aluminum, and the positive electrode active material layer includes a positive electrode active material, and the positive electrode active material may be lithium cobalt oxide, lithium iron phosphate, ternary lithium, lithium manganate, or the like. The negative electrode plate includes a negative electrode current collector and a negative electrode active material layer, and the negative electrode active material layer is coated on a surface of the negative electrode current collector; and the negative electrode current collector includes a negative electrode coating region and a negative tab connected to the negative electrode coating region, the negative electrode coating region is coated with the negative electrode active material layer, and the negative tab is not coated with the negative electrode active material layer. The material of the negative electrode current collector may be copper, and the negative electrode active material layer includes a negative electrode active material, and the negative electrode active material may be carbon, silicon, or the like. The material of the spacer may be PP (polypropylene) or PE (polyethylene) and the like.

In terms of the types of electrode plates, the composite electrode plate belongs to one of them and belongs to an electrode component. Because the composite current collector of the composite electrode plate is of a sandwich structure including a metal coating, an intermediate insulating base layer and a metal coating, the thickness of the metal coatings is greatly reduced, and the metal coatings are not easy to produce too long burrs to cause short circuit lapping of opposite electrode plates, and the safety is high. Therefore, the composite electrode plate has a wide application in secondary batteries; and the composite electrode plate can be a positive electrode composite electrode plate and can also be a negative electrode composite electrode plate. Generally, the composite electrode plate includes the composite current collector, the tab connected to the composite current collector and the active material coating the surface of the composite current collector.

However, in related technologies, the composite electrode plate is usually divided into a blank area, an insulating layer coating region and an active material layer coating region which are arranged sequentially in the width direction of the composite electrode plate, and the blank area is separately in welding connection with the tab; and therefore, there is still a lot of possibility of improvement in design of the composite electrode plate with this structure at least in terms of increasing the coating area of the active material layer. In order to understand the technical solution conveniently, the composite electrode plates are collectively called as the electrode component in the following.

The applicant further analyzes and finds that the coating area of the active material layer can be increased through the structural improvement of the electrode component, then the capacity of the active material on the electrode component is improved, and the performance of the battery cell is improved.

In view of this, an embodiment of the present application provides an electrode component, and aims to increase the coating area of the active material layer through the structural improvement of the electrode component, then to improve capacity of an active material on the electrode component.

An embodiment of the present application provides an electrode component, which includes an electrode body and a tab assembly. The electrode body includes an active material layer, an insulation substrate and a conductive layer arranged on the insulation substrate; a surface, facing away from the insulation substrate, of the conductive layer includes a first area and a second area which are adjacently arranged in a first direction, and the active material layer covers the first area; one end of the tab assembly is connected to the second area; and in the first direction, the maximum space between the end, connected to the second area, of the tab assembly and the active material layer is D0; and the minimum size of a part, not connected to the tab assembly, of the second area is D1, and D0 is smaller than D1.

Compared with an electrode component in related technology, in some embodiments of the present application, the active material layer covers a first area; one end of the tab assembly is connected to the second area, in the first direction, the maximum space between the end, connected to the second area, of the tab assembly and the active material layer is D0, the minimum size of the part, not connected to the tab assembly, of the second area is D1, and D0 is smaller than D1, and therefore, a structure that a blank area is independently arranged at the side, facing away from the active material layer coating region, of the insulating layer coating region for welding the tab in the related technology is changed. Therefore, according to the embodiments of the present application, the active material layer can be arranged on the conductive layer in a longer size along the first direction, that is, the size of the first area in the first direction can be increased under a condition that the size of the conductive layer in the first direction is fixed, then more active material layers can be coated, thereby increasing the coating area of the active material layer, improving the capacity of the active material layer on the electrode component; and an insulation coating can also be coated on the surface of the second area in subsequent electrode component manufacturing process.

The battery cell disclosed by the embodiment of the present application can be but not limited to electrical apparatuss such as vehicles, ships or aircrafts.

An embodiment of the present application provides a battery including the battery cell or an electrical apparatus using the battery cell as a power supply, and the electrical apparatus can be but not limited to mobile phones, tablet computers, notebook computers, electric toys, electric tools, electric vehicles, electric automobiles, ships, spacecraft and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

In order to facilitate description in the following embodiments, that the electrical apparatus in one embodiment of the present application is a vehicle 1000 is taken as an example.

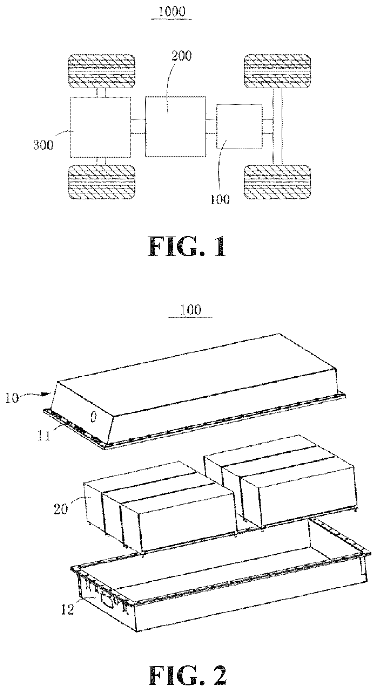

With reference to FIG. 1, FIG. 1 is a structural schematic diagram of a vehicle 1000 provided in some embodiments of the present application. The vehicle 1000 may be a fuel vehicle, a gas vehicle or a new energy vehicle, and the new energy vehicle may be a pure electric vehicle, a hybrid electric vehicle or an extended-range vehicle and the like. A battery 100 is arranged in the vehicle 1000. The battery 100 may be arranged at the bottom or head portion or tail portion of the vehicle 1000. The battery 100 may be used as a power supply for the vehicle 1000, for example, the battery 100 may be used as an operating power source for the vehicle 1000. The vehicle 1000 can further include a controller 200 and a motor 300, and the controller 200 is used for controlling the battery 100 to supply power to the motor 300, for example, the controller 200 is used for meeting the working power consumption requirements of the vehicle 1000 in starting, navigation and driving.

In some embodiments of the present application, the battery 100 can serve as the operation power source of the vehicle 1000 and can also serve as a driving power source of the vehicle 1000, and replaces or partially replace fuel oil or natural gas to provide driving power for the vehicle 1000.

With reference to FIG. 2, FIG. 2 is an exploded view of a battery 100 provided in some embodiments of the present application. The battery 100 includes a box 10 and a battery cell 20; and the battery cell 20 is accommodated within the box 10. The box body 10 is used for providing an accommodating space for the battery cell 20, and the box body 10 can be of various structures. In some embodiments, the box body 10 can include a first part 11 and a second part 12, the first part 11 and the second part 12 are mutually covered, and the first part 11 and the second part 12 jointly define the accommodating space for accommodating the battery cell 20. The second part 12 can be of a hollow structure with an opening in one end; the first part 11 can be of a plate-shaped structure; the first part 11 covers the opening side of the second part 12, so that the first part 11 and the second part 12 jointly define the accommodating space; the first part 11 and the second part 12 can also be of hollow structures with openings in one side; and the opening side of the first part 11 covers the opening side of the second part 12. Of course, the box body 10 formed by the first part 11 and the second part 12 may be of a variety of shapes, such as a cylinder and a rectangular solid.

In the battery 100, there may be a plurality of battery cells 20, and the plurality of battery cells 20 may be connected in series or in parallel or in parallel-series, where the parallel-series connection means that the plurality of battery cells 20 are connected in both series and parallel. The plurality of battery cells 20 can be directly connected in series or in parallel or in series-parallel connection, and then the whole body formed by the plurality of battery cells 20 is accommodated in the box 10; definitely, the battery 100 can also be in a form of a battery module formed by connecting the plurality of battery cells 20 in series or in parallel or in series-parallel connection; and a plurality of batteries modules are connected in series or in parallel or in series-parallel connection as a whole and are accommodated in the box 10. The battery 100 can also include other structures, for example, the battery 100 can also include a convergence component, and the plurality of battery cells 20 can be electrically connected through the convergence component so as to realize the series connection or parallel connection or series-parallel connection of the plurality of battery cells 20. The convergence component can be a metal conductor, such as copper, iron, aluminum, stainless steel, aluminum alloy and the like.

Each battery cell 20 can be a lithium-sulfur battery, a sodium ion battery or a magnesium ion battery, but not limited thereto. The battery cell 20 can be in a cylinder shape, a flat body shape, a cuboid shape or other shapes.

In order to clearly know the electrode component 30 provided by the embodiment of the present application, description is made below in an embodiment mode.

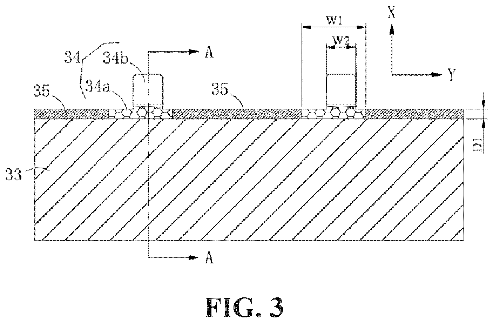

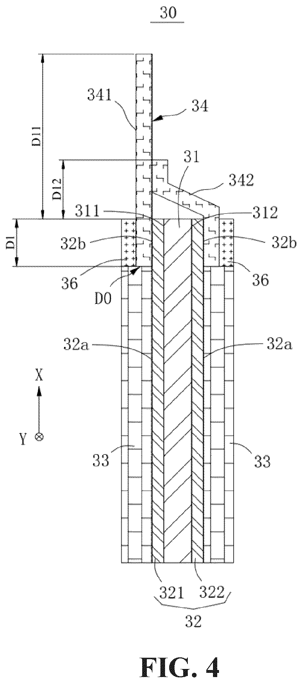

With reference to FIG. 3 and FIG. 4, an embodiment of the present application provides the electrode component 30, and the electrode component 30 includes an electrode body and a tab assembly 34; and the electrode body includes an insulation substrate 31, a conductive layer 32 and active material layers 33. The conductive layer 32 is arranged on the insulation substrate 31; a surface, facing away from the insulation substrate 31, of the conductive layer 32 includes first areas 32a and second areas 32b which are arranged adjacent to each other along a first direction X, and the active material layers 33 cover the first areas 32a; and one end of the tab assembly 34 is connected to the second areas 32b.

In the first direction X, the maximum space between the end, connected to the second areas 32b, of the tab assembly 34 and the active material layers 33 is D0; and the minimum size of a part, not connected to the tab assembly 34, of the second areas 32b is D1, and D0 is smaller than D1.

Compared with an electrode component in related technology, in some embodiments of the present application, the active material layers 33 cover the first areas 32a; one end of the tab assembly 34 is connected to the second areas 32b, in the first direction X, the maximum space between the end, connected to the second areas 32b, of the tab assembly 34 and the active material layers 33 is D0, the minimum size of the part, not connected to the tab assembly 34, of the second areas 32b is D1, and D0 is smaller than D1, and therefore, a structure that a blank area is independently arranged at the side, facing away from the active material layer coating region, of the insulating layer coating region for welding the tab in the related technology is changed. Therefore, according to the embodiments of the present application, the active material layers 33 can be arranged on the conductive layer 32 in a longer size along the first direction, that is, the size of the first areas 32a in the first direction X can be increased under a condition that the size of the conductive layer 32 in the first direction X is fixed, then more active material layers 33 can be coated, thereby increasing the coating area of the active material layers 33, improving the capacity of the active material layers 33 on the electrode component 30; and an insulation coating can also be coated on the surfaces of the second areas 32b in subsequent electrode component 30 manufacturing process.

The coating area of the active material layers 33 is increased to increase the capacity of the active material layers 33 on the electrode component 30, and moreover, the current carrying capacity of the electrode component 30 is also an important performance, so it is also particularly important to the improvement of the current carrying capacity.

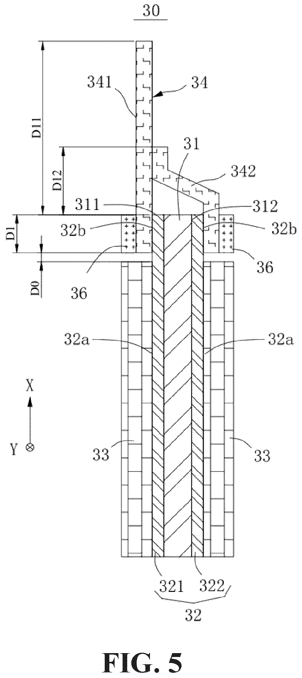

With reference to FIG. 3 to FIG. 5, in some embodiments, $0.5 \geq D0/D1$. Because $0.5 \geq D0/D1$, the tab assembly 34 and the second areas 32b can form a large-area connection area, which facilitates the improvement of the current carrying capacity of the electrode component 30. Specifically, D0/D1 can be 0, 0.1, 0.2, 0.3, 0.4, 0.5 and the like.

Further, in some embodiments, with reference to FIG. 4, the end, connected to the second areas 32b, of the tab assembly 34 is in contact with the active material layers 33. By further making the end, connected to the second areas 32b, of the tab assembly 34 in contact with the active material layers 33, the spaces of the second areas 32b in the first direction X can be utilized to the maximum extent, thus the connection area of the tab assembly 34 and the second areas 32b is increased, and then the current carrying capacity is improved.

In addition, with reference to FIG. 3 to FIG. 4, in some embodiments, the tab assembly 34 includes:

a connection section 34a connected to the second areas 32b; and
an extension section 34b which is connected to the connection section 34a and extends out of the conductive layer 32;
in which, the second areas 32b is in a long strip shape extending along a second direction, and the second direction Y is perpendicular to the first direction X; and the maximum size W1 of the connection section 34a in the second direction Y is not smaller than the maximum size W2 of the extension section 34b in the second direction Y.

The maximum size W1 of the connection section 34a in the second direction Y is not smaller than the maximum size W2 of the extension section 34b in the second direction Y, so the size of the connection section 34a in the second direction Y is increased, then the connection area of the connection section 34a and the second areas 32b is increased, and the current carrying capacity is improved.

In some embodiments, with reference to FIG. 3 to FIG. 4, $W1/W2 \geq 1.5$. A large number of tests verify that when $W1/W2 \geq 1.5$, the connection area between the connection section 34a and the second areas 32b can be well increased, and thus the current carrying capacity is improved.

More specifically, in some embodiments, W1 is twice of W2. A large number of tests verify that W1 is twice of W2, so that the size of the connection section 34a in the second direction Y is not too long, and moreover, the current carrying capacity is improved. In some embodiments, W1/W2 can be 1.5, 2, 3, 4 or 5.

In addition, with reference to FIG. 3 to FIG. 4, in some embodiments, the connection section 34a is of a long-strip-shaped sheet structure, and the long-strip-shaped sheet structure is provided with a welding surface which is attached to and is in welding connection with the second areas 32b. Due to the long-strip-shaped sheet structure, the structure is simple, machining and molding are facilitate, and the long-strip-shaped sheet structure is provided with the welding surface which is attached to and is in welding connection with the second areas 32b, which facilitates welding connection.

More specifically, with reference to FIG. 3 to FIG. 4, in some embodiments, the insulation substrate 31 includes a first surface 311 and a second surface 312 which are arranged back to back, the conductive layer 32 includes a first conductive layer 321 arranged on the first surface 311 and a second conductive layer 322 arranged on the second surface 312, and the first conductive layer 321 and the second conductive layer 322 correspondingly include first areas 32a and second areas 32b which are adjacently arranged in the first direction X; and the tab assembly 34 includes a first tab sheet 341 and a second tab sheet 342. One end of first tab sheet 341 is connected to the second areas 32b of the first conductive layer 321; and the second tab sheet 342 is arranged on one side of the first tab sheet 341 in a stacked mode, one end of the second tab sheet 342 is connected to the second areas 32b of the second conductive layer 322, and the other end of the second tab sheet 342 is electrically connected to the first tab sheet 341, specifically in a welding manner; the connection section 34a includes an end, connected to the first conductive layer 321, of the first tab sheet 341, and an end, connected to the second conductive layer 322, of the second tab sheet 342; and the extension section 34b includes an end, not connected to the first conductive layer 321, of the first tab sheet 341, and an end, not connected to the second conductive layer 322, of the second tab sheet 342.

In some embodiments, the tab assembly 34 includes the first tab sheet 341 and the second tab sheet 342; the connection section 34a includes the end, connected to the first conductive layer 321, of the first tab sheet 341, and the end, connected to the second conductive layer 322, of the second tab sheet 342; and the extension section 34b includes the end, not connected to the first conductive layer 321, of the first tab sheet 341, and the end, not connected to the second conductive layer 322, of the second tab sheet 342, then the extension section can be connected to the corresponding first conductive layer 321 and the corresponding second conductive layer 322 for conduction and current convergence. The first tab sheet 341 and the second tab sheet 342 are arranged, the first tab sheet 341 is electrically connected to the second tab sheet 342 to realize conductive convergence of the first conductive layer 321 and the second conductive layer 322.

In addition, with reference to FIG. 4, in some embodiments, the electrode component 30 further includes first protection layers 35 and/or second protection layers 36. The first protection layers 35 at least partially cover a position, not connected to the tab assembly 34, of the second areas 32b; and the second protection layers 36 at least partially cover the end, connected to the second areas 32b, of the tab assembly 34. In some embodiments, the first protection layers 35 include an insulation ceramic. Therefore, the first protection layers 35 have the insulation protection effect; and the structure is simple, the cost is low, and it can be glue or hot melt adhesive and the like. The same as the first protection layers 35, the second protection layers 36 have the protection effect. Specifically, in some embodiments, the second protection layers 36 include a water-based adhesive, a hot melt adhesive or an insulation ceramic. Therefore, the second protection layers 36 have the insulation protection effect; and the structure is simple, and the cost is low.

More specifically, with reference to FIG. 3 to FIG. 4, in some embodiments, a first end of the first tab sheet 341 is connected to the second areas 32b of the first conductive layer 321, and a second end of the first tab sheet 341 extends out of the first conductive layer 321; the second tab sheet 342 is arranged on one side of the first tab sheet 341 in a stacked manner and is electrically connected to the first tab sheet 341, a first end of the second tab sheet 342 is connected to the second areas 32b of the first conductive layer 321, and a second end of the second tab sheet 342 extends out of a second conductive layer 322; the extension section 34b includes the second end of the first tab sheet 341 and the second end of the second tab sheet 342, and the connection section 34a includes the first end of the first tab sheet 341 and the first end of the second tab sheet 342. For the electrical connection mode of the first tab sheet 341 and the second tab sheet 342, with reference to FIG. 4, in some embodiments, the second end of the first tab sheet 341 is welded with the second end of the second tab sheet 342.

With reference to FIG. 4, in some embodiments, the maximum size of the first tab sheet 341 extending out of the first conductive layer 321 in the first direction X is D11, and the maximum size of the second tab sheet 342 extending out of the first conductive layer 321 in the first direction X is D12; in which, D11 > D12. In some cases, if the tab assembly 34 is too thick, it is inconvenient to bend, consequently, subsequent machining and manufacturing of the battery cell 20 are inconvenient. According to the embodiment of the present application, D11 > D12, so the first tab sheet 341 is a long tab, and the second tab sheet 342 is a short tab, and then the first tab 341 may have a part which is not connected to the second tab sheet 342; and the tab assembly 34 is thinner in this part, so that it is more convenient to bend, and then the bending of the electrode assembly 34 in the subsequent machining and manufacturing process of the battery cell 20 is improved.

Further, in some embodiments, D11/D12≥5. A large number of tests verify that when D11/D12≥5, a relatively good part convenient for bending the tab assembly 34 can be formed, for example, the ratio can be 5, 6, 7, 8, 9 or 10.

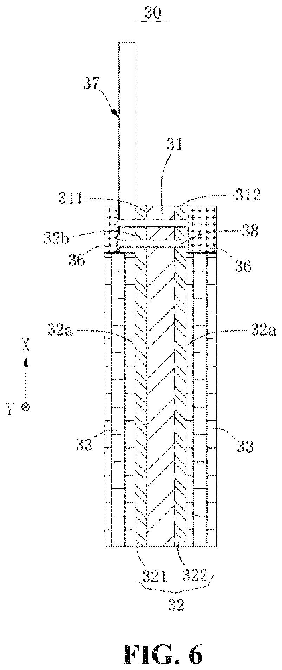

In addition, for the specific structure of the tab assembly 34, in some embodiments, the first tab sheet 341 and the second tab sheet 342 are adopted. In some other embodiments, with reference to FIG. 6, the tab assembly 34 can also include a tab sheet 37, namely, one tab sheet 37 is reserved. One end of the tab sheet 37 is in riveted connection with the second areas 32b of the first conductive layer 321 and the second areas 32b of the second conductive layer 322. As shown in the figure, riveting is performed through a riveting piece 38. In some embodiments, the tab assembly 34 includes a single tab sheet 37, and one end of the tab sheet 37 is in riveted connection with the second areas 32b of the first conductive layer 321 and the second areas 32b of the second conductive layer 322; the connection section 34a of the tab assembly 34 includes an end, connected to the first conductive layer 321, of the tab sheet 37; and the extension section 34b includes an end, not connected to the second conductive layer 322, of the tab sheet 37 for conduction, so that current of the first conducting layer 321 and the second conducting layer 322 can be converged and led out through the tab sheet 37.

An embodiment of the present application further provides a battery cell 20, and the battery cell 20 includes the electrode component 30 provided in any embodiment, and the capacity of the active material layers 33 on the electrode component 30 can be improved by increasing the coating area of the active material layers 33 of the electrode component 30, thereby improving the performance of the battery cell 20. Specifically, the battery cell includes a positive electrode plate, a diaphragm and a negative electrode plate which are arranged in a stacked mode, in which, one of the positive electrode plate and the negative electrode plate can be designed as the electrode component 30 in any embodiment, so that the electrode assembly is formed; and the electrode assembly can be of a cylindrical winding structure, a flat cylindrical winding structure or a laminated structure, which is not specifically limited.

An embodiment of the present application further provides a battery 10, and the battery 10 includes a plurality of battery cells 20 provided in any embodiment, and the battery cells 20 are used for providing electric energy. The capacity of the active material layers 33 on the electrode component 30 can be improved by increasing the coating area of the active material layers 33 of the electrode component 30, thereby improving the performance of the battery 10.

An embodiment of the present application further provides an electrical apparatus, which includes the battery 10 provided in any embodiment, and the battery 10 is used for providing electric energy. The capacity of the active material layers 33 on the electrode component 30 can be improved by increasing the coating area of the active material layers 33 of the electrode component 30, thereby improving the performance of the electrical apparatus.

The embodiment of the present application provides the electrode component 30. With reference to FIG. 3 to FIG. 4, the electrode component 30 includes the electrode body, the tab assembly 34, the first protection layers 35 and the second protection layers 36; and the electrode body includes the insulation substrate 31, the conductive layers 32 and the active material layers 33. The insulation substrate 31 is provided with the first surface 311 and the second surface 312; the conductive layers 32 are respectively arranged on the first surface 311 and the second surface 312 and are provided with third surfaces facing away from the insulation substrate 31; each third surface includes the first area 32a and the second area 32b which are adjacent to each other in the first direction X; the active material layers 33 are arranged in the first area 32a; the tab assembly 34 includes the connection section 34a and the extension section 34b, the connection section 34a is connected to the second area 32b, and the extension section 34b extends out of the conductive layer 32; the first protection layers 35 are arranged at the part, not connected to the tab assembly 34, of the second area 32b. The end, connected to the second area 32b, of the tab assembly 34 is in contact with the active material layers 33. The first protection layers 35 include the insulation ceramic. Therefore, the first protection layers 35 have the insulation protection effect; and the structure is simple, the cost is low, and it can be glue or hot melt adhesive and the like. The second protection layers 36 cover the end, connected to the second area 32b, of the tab assembly 34.

Specifically, each conductive layer 32 includes the first conductive layer 321 arranged on the first surface 311 and the second conductive layer 322 arranged on the second surface 312; the first conductive layer 321 and the second conductive layer 322 correspondingly include the first area 32a and the second area 32b which are adjacently arranged in the first direction X; and the tab assembly 34 includes the first tab sheet 341 and the second tab sheet 342. The first end of the first tab sheet 341 is connected to the second area 32b of the first conductive layer 321, and the second end of the first tab sheet 341 extends out of the first conductive layer 321; the second tab sheet 342 is arranged on one side of the first tab sheet 341 in a stacked manner and is electrically connected to the first tab sheet 341, the first end of the second tab sheet 342 is connected to the second area 32b of the first conductive layer 321, and the second end of the second tab sheet 342 extends out of the second conductive layer 322 and is in welding connection with the second end of the first tab sheet 341; the extension section 34b of the tab assembly 34 includes the second end of the first tab sheet 341 and the second end of the second tab sheet 342; and the connection section 34a of the tab assembly 34 includes the first end of the first tab sheet 341 and the first end of the second tab sheet 342.

Finally, it is to be noted that the above embodiments are only used for illustrating the technical solutions of the present application, not to limit them, and although the present application is described in detail with reference to the foregoing embodiments, those of ordinary skill in the art should understand that it may still modify the technical solutions described in the foregoing embodiments, or replace some or all of the technical features therein, and these modifications or substitutions do not make the essence of the corresponding technical solutions out of the scope of the technical solutions of the embodiments of the present application, and they should be covered by the scope of the claims and description of the present application. In particular, as long as there are no structural conflicts, the technical features mentioned in the individual embodiments can be combined in any way. The present application is not limited to the specific embodiments disclosed herein, but rather includes all technical solutions falling within the scope of the claims.

**Claims**

1. An electrode component, comprising:

   an electrode body comprising an active material layer, an insulation substrate and a conductive layer arranged on the insulation substrate, wherein a surface, facing away from the insulation substrate, of the conductive layer comprises a first area and a second area which are adjacently arranged in a first direction, and the active material layer covers the first area; and
   a tab assembly of which one end is connected to the second area;
   wherein in the first direction, the maximum space between the end, connected to the second area, of the tab assembly and the active material layer is D0; and the minimum size of a part, not connected to the tab assembly, of the second area is D1, and D0 is smaller than D1.

2. The electrode component according to claim 1, wherein

$$0.5 \geq D0/D1.$$

3. The electrode component according to claim 2, wherein
   the end, connected to the second area, of the tab assembly is in contact with the active material layer.

4. The electrode component according to any one of claims 1 to 3, wherein
   the tab assembly comprises:

   a connection section connected to the second area; and
   an extension section which is connected to the connection section and extends out of the conductive layer; wherein
   the second area is in a long strip shape extending along a second direction, the maximum size W1 of the connection section in the second direction is not smaller than the maximum size W2 of the extension section in the second direction, and the second direction is perpendicular to the first direction.

5. The electrode component according to claim 4, wherein

$$W1/W2 \geq 1.5.$$

6. The electrode component according to claim 5, wherein

$$W1 = 2*W2.$$

7. The electrode component according to claim 4, wherein
   the connection section is of a long-strip-shaped sheet structure, and the long-strip-shaped sheet structure is provided with a welding surface which is attached to and is in welding connection with the second area.

8. The electrode component according to claim 4, wherein
   the insulation substrate comprises a first surface and a second surface which are arranged back to back, the conductive layer comprises a first conductive layer arranged on the first surface and a second conductive layer arranged on the second surface, and the first conductive layer and the second conductive layer correspondingly comprise the first area and the second area which are adjacently arranged in the first direction; the tab assembly comprises:

   a first tab sheet of which one end is connected to the second area of the first conductive layer; and
   a second tab sheet which is arranged on one side of the first tab sheet in a stacked mode, wherein one end of the second tab sheet is connected to the second area of the second conductive layer, and the other end of the second tab sheet is electrically connected to the first tab sheet;
   wherein the connection section comprises an end, connected to the first conductive layer, of the first tab sheet, and an end, connected to the second conductive layer, of the second tab sheet; and the extension section comprises an end, not connected to the first conductive layer, of the first tab sheet, and an end, not connected to the second conductive layer, of the second tab sheet.

9. The electrode component according to claim 4, wherein
   the insulation substrate comprises a first surface and a second surface which are arranged back to back, the conductive layer comprises a first conductive layer arranged on the first surface and a second conductive layer arranged on the second surface, and the first conductive layer and the second conductive layer correspondingly comprise the first area and the second area which are adjacently arranged in the first direction; the tab assembly comprises:

a tab sheet of which one end is in riveted connection with the second area of the first conductive layer and the second area of the second conductive layer;
the connection section comprises an end, connected to the first conductive layer, of the tab sheet; and the extension section comprises an end, not connected to the second conductive layer, of the tab sheet.

10. The electrode component according to any one of claims 1 to 3, wherein
the electrode component further comprises:

a first protection layer which at least partially covers the position, not connected to the tab assembly, of the second area;
and/or,
a second protection layer which at least partially covers the end, connected to the second area, of the tab assembly.

11. The electrode component according to claim 10, wherein
the first protection layer comprises an insulation ceramic.

12. The electrode component according to claim 10, wherein
the second protection layer comprises a water-based adhesive, a hot melt adhesive or an insulation ceramic.

13. The electrode component according to any one of claims 1 to 3, wherein
the insulation substrate comprises a first surface and a second surface which are arranged back to back, the conductive layer comprises a first conductive layer arranged on the first surface and a second conductive layer arranged on the second surface, and the first conductive layer and the second conductive layer correspondingly comprise the first area and the second area which are adjacently arranged in the first direction; the tab assembly comprises:

a first tab sheet of which one end is connected to the second area of the first conductive layer; and
a second tab sheet which is arranged on one side of the first tab sheet in a stacked mode, wherein one end of the second tab sheet is connected to the second area of the second conductive layer, and the other end of the second tab sheet is electrically connected to the first tab sheet.

14. The electrode component according to claim 13, wherein
the maximum size of the first tab sheet extending out of the first conductive layer in the first direction is D11, and the maximum size of the second tab sheet extending out of the first conductive layer in the first direction is D12; and

$$D11 > D12.$$

15. The electrode component according to claim 14, wherein

$$D11/D12 \geq 5.$$

16. The electrode component according to any one of claims 1 to 3, wherein
the insulation substrate comprises a first surface and a second surface which are arranged back to back, the conductive layer comprises a first conductive layer arranged on the first surface and a second conductive layer arranged on the second surface, and the first conductive layer and the second conductive layer correspondingly comprise the first area and the second area which are adjacently arranged in the first direction; the tab assembly comprises:
a tab sheet of which one end is in riveted connection with the second area of the first conductive layer and the second area of the second conductive layer.

17. A battery cell, comprising the electrode component according to any one of claims 1 to 16.

18. A battery, comprising the battery cell according to claim 17, wherein the battery cell is used for providing electric energy.

19. An electrical apparatus, comprising the battery according to claim 18, wherein the battery is used for providing electric energy.

1000

200

300

100

**FIG. 1**

100

10

11

0

20

12

**FIG. 2**

FIG. 3

30

**FIG. 4**

30

FIG. 5

**FIG. 6**

## INTERNATIONAL SEARCH REPORT

International application No.

**PCT/CN2023/127800**

### A. CLASSIFICATION OF SUBJECT MATTER

H01M4/13(2010.01)i; H01M50/536(2021.01)i; H01M10/052(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, CNABS, VEN, CNKI: 电池, 电极, 极耳, 活性物质, 绝缘, 导电层, 连接段, 伸出段, 距离, 尺寸, cell, electric cell, lithium cell, electrode, tab, active material, active substance, insulation, isolation, conductive layer, dimension, size

### C. DOCUMENTS CONSIDERED TO BE RELEVANT

| Category* | Citation of document, with indication, where appropriate, of the relevant passages | Relevant to claim No. |
|---|---|---|
| X | CN 217768425 U (CONTEMPORARY AMPEREX TECHNOLOGY CO., LTD.) 08 November 2022 (2022-11-08) description, paragraphs 0005-0042 and 0108-0167 | 1-19 |
| A | CN 111584823 A (NINGDE AMPEREX TECHNOLOGY LTD.) 25 August 2020 (2020-08-25) entire document | 1-19 |
| A | CN 113097662 A (ZHUHAI COSMX BATTERY CO., LTD.) 09 July 2021 (2021-07-09) entire document | 1-19 |
| A | CN 217768705 U (CONTEMPORARY AMPEREX TECHNOLOGY CO., LTD.) 08 November 2022 (2022-11-08) entire document | 1-19 |
| A | CN 217788451 U (CONTEMPORARY AMPEREX TECHNOLOGY CO., LTD.) 11 November 2022 (2022-11-11) entire document | 1-19 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 January 2024** | **20 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2"></td><td>International application No.<br>**PCT/CN2023/127800**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| PX | CN 218867151 U (CONTEMPORARY AMPEREX TECHNOLOGY CO., LTD.) 14 April 2023 (2023-04-14)<br>  claims 1-19 | 1-19 |

Form PCT/ISA/210 (second sheet) (July 2022)

**INTERNATIONAL SEARCH REPORT**
Information on patent family members

International application No.

**PCT/CN2023/127800**

| Patent document cited in search report | | | Publication date (day/month/year) | Patent family member(s) | Publication date (day/month/year) |
|---|---|---|---|---|---|
| CN | 217768425 | U | 08 November 2022 | None | |
| CN | 111584823 | A | 25 August 2020 | None | |
| CN | 113097662 | A | 09 July 2021 | None | |
| CN | 217768705 | U | 08 November 2022 | None | |
| CN | 217788451 | U | 11 November 2022 | None | |
| CN | 218867151 | U | 14 April 2023 | None | |

Form PCT/ISA/210 (patent family annex) (July 2022)

**REFERENCES CITED IN THE DESCRIPTION**

**Patent documents cited in the description**

- CN 202223023491